# EUROPEAN PATENT APPLICATION

(11) **EP 1 369 609 A2**
(43) Date of publication of application: **10.12.2003**
(21) Application number: 02026192.1
(22) Date of filing: 25.11.2002
(51) Int. Cl.: F16D 3/207

(54) **Constant velocity joints**

(30) Priority: 04.06.2002 KR 2002031377
(71) Applicant: Kia Motors Corporation, Seocho-gu, Seoul (KR)
(72) Inventor: Yun, Hyuk Choon, Siheung-si, Gyeonggi-do (KR)
(74) Representative: Viering, Jentschura & Partner

(57) **Abstract**

The present invention relates to a constant velocity joint, and more particularly, to a tripod constant velocity joint for use in a driving axle of a vehicle. The constant velocity joint of the present invention comprises a housing 10 made in the form of a cylindrical shell, trunnions 20 installed at three positions equiangularly on an inner circumferential surface of the housing 10; bearings 30 coupled to the respective trunnions, rollers 40 coupled to the outsides of the respective bearings 30, and a driving axle 50 in which an insert 52 with grooves 51 formed at three positions equiangularly on an outer periphery thereof is coupled to an end of the axle so that the axle can be coupled into the housing 10 with the rollers 40 installed therein. According to the present invention, there are advantages in that the friction forces between the bearing, the roller and the trunnion can be reduced, the shudder can be effectively reduced by causing the sliding friction force of the roller with respect to the trunnion to be transmitted not to the driving axle but to the housing so that the friction force can be cancelled in the transmission side. Furthermore, the shudderless joint need not be employed, and no additional spline processing is required since the grooves formed in the insert can be manufactured through the forging process.

## Description

### BACKGROUND OF THE INVENTION

### 1. Field of the Invention

The present invention relates to a constant velocity joint, and more particularly, to a tripod constant velocity joint for use in a driving axle of a vehicle wherein shudder can be efficiently reduced in the vehicle by installing several assemblies of a trunnion, a bearing and a roller within a housing so that a sliding friction force between the roller and the trunnion is transmitted not to the driving axle but to the housing and then is cancelled in a transmission side.

### 2. Description of the Prior Art

A constant velocity joint is a joint for allowing driving and driven axles to be smoothly operated at an identical velocity even though an intersection angle between the driving and driven axles is increased. In general, the constant velocity joint is spline-coupled to a driving axle of a front wheel drive vehicle or a rear differential side gear in an independent suspension system.

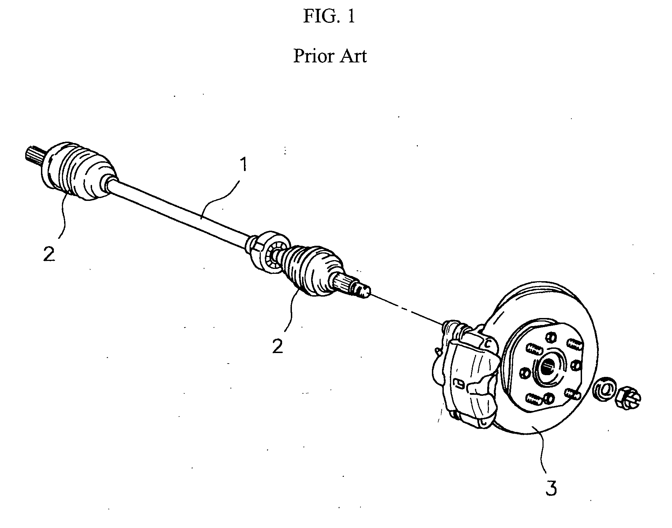

FIG. 1 is a perspective view of a conventional driving axle of a vehicle. As shown in the figure, the driving axle 1 of the vehicle is generally provided with two constant velocity joints 2 at a portion coupled to a transmission side and a portion coupled to a disk 3.

In generally, a double offset joint or tripod joint is used at the transmission side, whereas a birfield joint is used at the disk side.

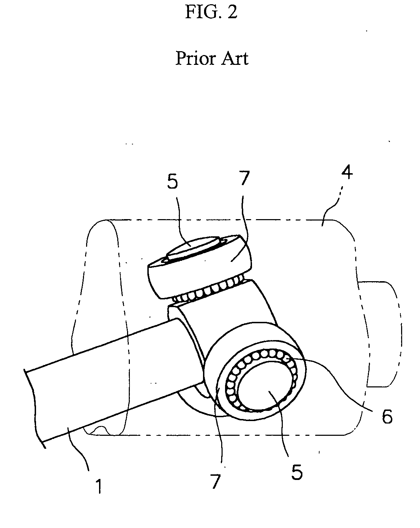

FIG. 2 is a perspective view of a conventional tripod joint. In the tripod joint, a roller 7 is assembled with a trunnion 5 with a bearing 6 interposed therebetween. The assemblies of the roller, the trunnion and the bearing are installed equiangularly at three positions within a housing 4 coupled to the transmission side. Then, the driving axle 1 is coupled into the housing 4. Thus, a driving force from the transmission side is transmitted to the driving axle at a constant velocity.

That is, the constant velocity joint is installed to the aforementioned transmission side or rear differential side gear. Thus, as the housing 4 is rotated, the roller 7 is rotated. Consequently, the driving axle 1 is also rotated.

However, shudder may be produced in the vehicle due to an axial force transmitted to the driving axle 1.

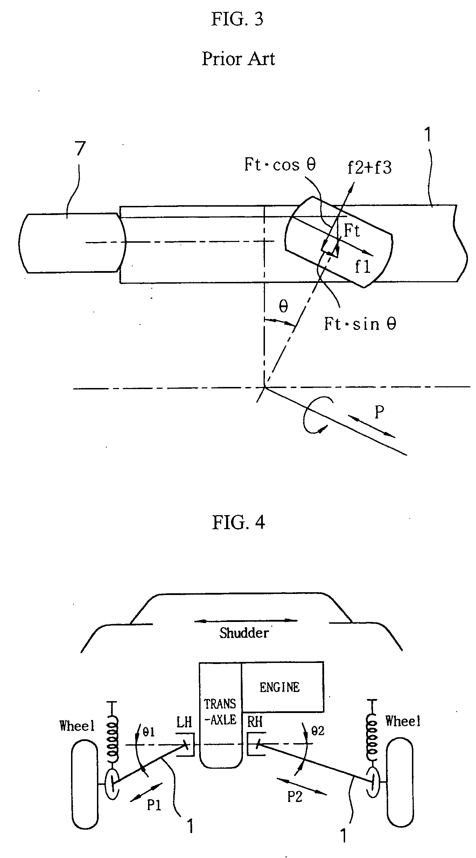

The axial force transmitted to the driving axle 1 is illustrated in FIG. 3. That is, a front portion of the vehicle is nose up due to an increase in engine torque upon low-speed acceleration, and thus, the intersection angle of the joint is also increased. Accordingly, there is a problem in that the axial force (P=Ftsinθ +f1, P1 and P2 in FIG. 4) brings about the shudder of the vehicle (refer to FIG. 4).

In FIG. 3, f2 is a friction force between the roller 7 and a groove of the housing 4 in a direction of the trunnion 5, and f3 is a friction force between the roller 7 and the trunnion 5.

In order to solve the above problem, a shudderless joint may be utilized so that the axial force can be considerably reduced. However, use of only the shudderless joint cannot fundamentally solve the problem. That is, the shudderless joint also has a constitution in which a force component of f3 corresponding to the friction force between the roller and the trunnion is transmitted directly to the driving axle. Therefore, the axial force cannot be completely reduced.

### SUMMARY OF THE INVENTION

The present invention is conceived to solve the problems in the prior art. Accordingly, it is an object of the present invention to provide a constant velocity joint wherein friction forces between bearings, rollers and trunnions can be reduced, shudder of a vehicle can be effectively reduced by causing the sliding friction forces of the rollers with the trunnions to be transmitted not to a driving axle but to a housing so that the friction forces can be cancelled in a transmission side, a shudderless joint need not be employed, and no additional spline processing is required since grooves formed in an insert can be manufactured through a forging process.

According to an aspect of the present invention for achieving the object, there is provided a constant velocity joint, which comprises a housing made in the form of a cylindrical shell, trunnions installed at three positions equiangularly on an inner circumferential surface of the housing; bearings coupled to the respective trunnions, rollers coupled to the outsides of the respective bearings, and a driving axle in which an insert with three grooves formed equiangularly on an outer periphery thereof is coupled to an end of the axle so that the axle can be coupled into the housing with the rollers installed therein.

### BRIEF DESCRIPTION OF THE DRAWINGS

The above and other objects, advantages and features of the present invention will become apparent from the following description of a preferred embodiment given in conjunction with the accompanying drawings, in which:
FIG. 1 is a perspective view of a general driving axle for use in a vehicle;
FIG. 2 is a perspective view of a conventional tripod joint;
FIG. 3 is a schematic view illustrating force components generated in the conventional tripod joint;
FIG. 4 is a schematic view illustrating an operating state of the conventional driving axle of the vehicle;
FIG. 5 is a perspective view of a constant velocity joint according to a preferred embodiment of the present invention;
FIG. 6 is a side view of the constant velocity joint according to the preferred embodiment of the present invention; and
FIG. **7** is a sectional view taken along line A-A of FIG. 6.

### DETAILED DESCRIPTION OF THE INVENTION

Hereinafter, a preferred embodiment of the present invention will be explained in detail with reference to the accompanying drawings.

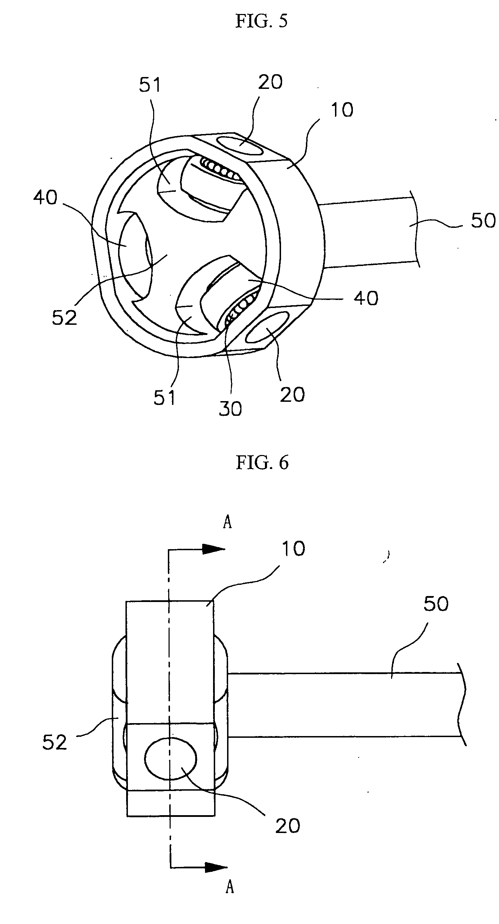

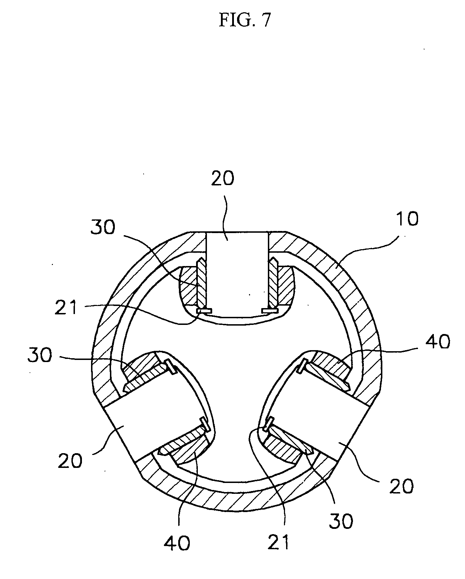

FIG. 5 is a perspective view of a constant velocity joint according to a preferred embodiment of the present invention, FIG. 6 is a side view of the constant velocity joint according to the preferred embodiment of the present invention, and FIG. 7 is a sectional view taken along line A-A of FIG. 6. As shown in the figures, the constant velocity joint of the present invention comprises a housing 10 made in the form of a cylindrical shell, trunnions 20 installed at three positions equiangularly on an inner circumferential surface of the housing 10, bearings 30 coupled to the respective trunnions, rollers 40 coupled to the outsides of the respective bearings 30, and a driving axle 50 in which an insert 52 with grooves 51 formed at three positions equiangularly on an outer periphery thereof is coupled to an end of the axle so that the axle can be coupled into the housing 10 with the rollers 40 installed therein.

Since rolling surfaces of the rollers 40 and contact surfaces of grooves 51 with the rollers 40 are formed to be spherical, a friction force due to rolling action of each roller 40 can be minimized so that any axial motions are not produced in the driving axle 50.

Further, the trunnions 20 are fitted into holes formed equiangularly along a circumference of the housing 10, and then fixed thereto through a press-fit process or with an adhesive. Thereafter, the bearings 30 and the rollers 40 are sequentially installed around the trunnions 20 fixed to the housing 10, respectively.

As shown in the figures, a needle bearing in the form of the cylindrical shell for surrounding the trunnion 20 is used as the bearing 30.

Preferably, each of the trunnions 20 further comprises a spacer 21 for preventing the bearing 30 from coming into contact with the relevant groove 51 of the insert 50.

Hereinafter, an operation and effect of the present invention will be described with reference to FIGS. 5 to 7.

The present invention is characterized in that in the constant velocity joint, the trunnions 20, bearings 30, and rollers 40 are mounted to the housing 10.

With such a constitution, the sliding friction force with respect to the trunnion 20 is basically transferred to the housing 10 rather than the driving axle 50, so that it can be cancelled in a transmission side.

In other words, a friction force between the roller 40 and the bearing 30, a rotational friction force between the roller 40 and the housing with respect to an axis of the trunnion 20, and an axial (linear) friction force between the roller 40 and the housing with respect to the axis of the trunnion 20 is decreased, and a spin force of the roller 40 is also reduced.

Therefore, an amount of the axial force to be transmitted to the driving axle 50 is decreased, and thus, the shudder of the vehicle can be basically reduced.

Further, since the constant velocity of the present invention has a superior effect in reducing the axial force as described above, the expensive shudderless joint need not be used. In addition, if the shudderless joint is employed together with the constant velocity joint of the present invention, an effect of reduction in the axial force can be further improved.

In the meantime, the grooves 51 formed in the insert 52 can be manufactured through a general forging process. Thus, any additional spline processing is not needed.

According to the constant velocity joint of the present invention constructed as such, the friction forces between the bearing, the roller and the trunnion can be reduced. Further, the shudder can be effectively reduced by causing the sliding friction force of the roller with respect to the trunnion to be transmitted not to the driving axle but to the housing so that the friction force can be cancelled in the transmission side. Furthermore, the shudderless joint need not be employed. Finally, no additional spline processing is required since the grooves formed in the insert can be manufactured through the forging process.

Although the present invention has been described in connection with the preferred embodiment with reference to the accompanying drawings, the preferred embodiment is intended not to limit the invention but to exemplify a best mode of the present invention. It will be understood by those skilled in the art that various changes or modifications may be made thereto without departing from the spirit and scope of the invention. Therefore, the present invention is defined only by the appended claims which should be construed as covering such changes or modifications.

## Claims

1. A constant velocity joint, comprising:
a housing made in the form of a cylindrical shell;
trunnions installed at three positions equiangularly on an inner circumferential surface of the housing;
bearings coupled to the respective trunnions,
rollers coupled to the outsides of the respective bearings, and
a driving axle in which an insert with three grooves formed equiangularly on an outer periphery thereof is coupled to an end of the axle so that the axle can be coupled into the housing with the rollers installed therein.

2. The constant velocity joint as claimed in claim 1, wherein rolling surfaces of the rollers and contact surfaces of the grooves with the rollers are formed to be spherical.

3. The constant velocity joint as claimed in claim 1, wherein the trunnions are fitted into holes formed equiangularly along a circumference of the housing and then fixed thereto through a press-fit process or with an adhesive.

4. The constant velocity joint as claimed in claim 1, wherein each of the trunnions further includes a spacer for preventing the bearing from coming into contact with the relevant groove of the insert.
